**Europäisches Patentamt**

**European Patent Office**

**Office européen des brevets**

(19)

(11)   **EP 1 621 834 A1**

(12)     # EUROPÄISCHE PATENTANMELDUNG

(43) Veröffentlichungstag:
   **01.02.2006 Patentblatt 2006/05**

(21) Anmeldenummer: **05015173.7**

(22) Anmeldetag: **13.07.2005**

(51) Int Cl.:
   *F25D 23/06* *(2006.01)*     *B32B 27/08* *(2006.01)*
   *B32B 27/30* *(2006.01)*     *B32B 27/40* *(2006.01)*
   *B32B 5/20* *(2006.01)*     *C08J 5/18* *(2006.01)*

(84) Benannte Vertragsstaaten:
   **AT BE BG CH CY CZ DE DK EE ES FI FR GB GR HU IE IS IT LI LT LU LV MC NL PL PT RO SE SI SK TR**
   Benannte Erstreckungsstaaten:
   **AL BA HR MK YU**

(30) Priorität: **26.07.2004  DE 102004036248**

(71) Anmelder: **LANXESS Deutschland GmbH**
   **51369 Leverkusen (DE)**

(72) Erfinder:
   • **Slansky, Frank, Dipl.-Ing**
     **42855 Remscheid (DE)**
   • **Gojsic, Slaven, Dipl.-Ing.**
     **10000 Zagreb (HR)**
   • **Krause, Volkhard, Dipl.-Ing.**
     **51377 Leverkusen (DE)**
   • **Lorenz, Klaus, Dr.**
     **41539 Dormagen (DE)**
   • **Quaas, Gerwolf, Dipl.-Ing.**
     **51061 Köln (DE)**

(54)   **Verwendung von polyamidbasierten Deckschichten für die Produktion von Inlinern für Kältegeräte**

(57)     Die Erfindung betrifft die Verwendung von Kunststoffmassen basierend auf Mischungen von Polyamid und ABS als Deckschichten auf Isolierschaum für die Herstellung von Inlinern für Kältegeräte.

EP 1 621 834 A1

**Beschreibung**

Die vorliegende Erfindung reduziert erheblich die Gaspermeation durch Inlinermaterialien. Damit wird eine Reduzierung der Isoliereigenschaften der mit den Deckschichten in Kontakt befindlichen Schaumstoffe deutlich verzögert.

Die Isoliereigenschaften des Schaumstoffes bestimmen wesentlich den Energieverbrauch eines Kältegerätes sowie seine Einstufung in eine bestimmte Energieeffizienzklasse. Mit der vorliegenden Erfindung wird der Anstieg des Energieverbrauches solcher Geräte verzögert.

Bei der Kältegeräteproduktion werden Inlinerkörper aus Styrolbutadien oder in seltenen Fällen aus Acrylnitrilbutadienstyrol mit Polyurethanhartschaum hinterschäumt. Üblicherweise wird hierbei das Reaktionsgemisch in geeigneten Formwerkzeugen in den Zwischenraum zwischen Inlinerkörper und Außenkörper eingebracht, wo es zum Schaumstoff ausreagiert. Das zum Aufschäumen des Reaktionsgemisches verwendete Treibmittel ist eine Mischung aus physikalischen Treibmitteln (Kohlenwasserstoffen, HFKWs, HFCKWs) und $CO_2$. Letzteres resultiert als "chemisches" Treibmittel üblicherweise aus der Reaktion von dem Reaktionsgemisch zugesetztem Wasser mit dem Polyisocyanat. Es sind ferner auch rein kohlendioxidgetriebene Polyurethanhartschaumstoffe bekannt.

Nach abgeschlossenem Schäumprozess diffundiert zeitabhängig das in den Schaumstoffzellen enthaltene $CO_2$-Gas durch das Inlinermaterial. Gleichzeitig dringt Luft, im Wesentlichen ein Gemisch aus $N_2$ und $O_2$, aus der Umgebung von außen durch das Inlinermaterial in den PU-Schaum ein. Dies geschieht jedoch mit einer um etwa eine Größenordnung geringeren Diffusionsgeschwindigkeit. Die Isoliereigenschaften des Kältegerätes werden durch diesen Prozess vermindert, da die Wärmeleitzahl von Luft wesentlich größer ist als die Wärmeleitzahl von $CO_2$. Die Folgen sind ein Anstieg des Stromverbrauchs des Kältegerätes; die vom Hersteller angegebene Energieklasse wird nach einer bestimmten Zeit nicht mehr eingehalten. Es wurde gefunden, dass PA-ABS-Blends deutlich günstigere Gasbarriereeigenschaften als die z. Zt. verwendeten styrolbasierten Thermoplaste aufweisen.

Inliner für Kältegräte werden üblicherweise durch einen Tiefziehprozess aus Thermoplastplatten gefertigt. Die Platten werden aus Granulat (Thermoplaste auf Polystyrolbasis) durch Extrusion gefertigt. Der Inliner wird anschließend gemeinsam mit dem vormontierten Außenkörper in das Schäumwerkzeug eingelegt, das zum Schaumstoff ausreagierende PU-Reaktionsgemisch wird sodann in den Zwischenraum zwischen Inliner und Außenkörper eingebracht. In dem so erhaltenen Verbundsystem muss der Inliner optische, mechanische und hygienische Anforderungen des Kältegräteherstellers erfüllen. Der fest mit dem Inliner verbundene PU-Schaum bringt die erforderlichen Isoliereigenschaften und verbindet diesen mit dem Außenkörper.

Der beschriebene Diffusionsprozess von $CO_2$ und Luft durch Schaumstoff und Inlinermaterial führt, wie oben bereits erläutert, über die Zeit zu einer Verschlechterung der Isoliereigenschaften des PU-Hartschaumstoffs. Der Energieverbrauch eines Kältegerätes wird maßgeblich durch die Isolationswirkung des PU-Schaums bestimmt. Der anfängliche Energieverbrauch bestimmt die Einstufung der Kältegeräte in Energieeffizienzklassen, welche vom Kältegerätehersteller auch als Verkaufsargument verwendet werden. In der Literatur erwähnte Polyamidkunststoffe zeigen eine gegenüber den für Kühlgeräte standardmäßig verwendeten Kunststoffen wie schlagzäh modifiziertem Polystyrol, oder Acrylnitril-Butadien-Styrol-Copolymeren (ABS) eine deutlich geringere Permeation der Gase $CO_2$, $N_2$ und $O_2$ und führen somit zu einer Verzögerung des Energieverbrauchsanstiegs, der sogenannte "Alterungsprozess" des Kältegerätes wird verlangsamt. Die Verwendung von reinen Polyamiden als Inlinermaterialien ist jedoch aufgrund der begrenzten Tiefziehbarkeit teilkristalliner Thermoplaste sehr eingeschränkt. Weiterhin sind Polyamide kratzempfindlicher als styrolbasierte Kunststoffe und erfüllen somit die optischen, hygienischen Anforderungen für Inliner nicht vollständig. Es wurde gefunden, dass die Gasbarnereeigenschaften von Triax® (eingetragenes Handelsprodukt der Lanxess Deutschland GmbH), einem Blend aus Polyamid und Acrylnitril-Butadien-Styrol-Copolymer, im Vergleich zu den bekannten für Inliner verwendeten Kunststoffen SB und ABS, deutlich höher sind.

Gegenstand der Erfindung ist die Verwendung von Kunststoffmassen basierend auf Mischungen von Polyamid und ABS als Deckschicht auf Isolierschaum für die Herstellung von Inlinern für Kältegeräte.

Die besonderen Eigenschaften des neuen Deckschichtsystems sind nach den obigen Ausführungen vermutlich auf seinen Polyamidanteil zurückzuführen. Weiterhin lässt sich die genannte bevorzugt einzusetzende Kunststoffmischung hervorragend tiefziehen und übertrifft somit mit den kombinierten Eigenschaften aus Polyamid und ABS die Eigenschaften heute bekannter Kältegeräteinlinermaterialien. Ebenso ist beispielsweise Triax mit ABS coextrudierbar und kann daher auch in dünner Schicht als stark permeationshemmendes Material eingesetzt werden.

Die besonderen Eigenschaften der Deckschicht zeigt die nachstehende Tabelle.

**Permationsverhalten verschiedener Deckschichtmaterialien gegenüber $CO_2$, $N_2$, $O_2$**

| $\dfrac{cm^2}{s \cdot bar} \cdot 10^{-9}$ | $CO_2$ | $N_2$ | $O_2$ |
|---|---|---|---|
| SB* | 60 ... 200 | 2 ... 8 | 13 ... 30 |
| ABS* | 20 ... 70 | 0,8 ... 1,8 | 1,8 ... 8 |
| Triax 1120 | 2,2 | 0,1 | 0,9 |
| PA6* | 0,4 ... 1,7 | 0,02 ... 0,07 | 0,07 ... 0,2 |
| * Tabellenwerte aus K. Oberbach "Kunststoffkennwerte für Konstrukteure" | | | |

**Patentansprüche**

1. Verwendung von Kunststoffmassen basierend auf Mischungen von Polyamid und ABS als Deckschichten auf Isolierschaum für die Herstellung von Inlinern für Kältegeräte.

**Europäisches Patentamt**

**EUROPÄISCHER RECHERCHENBERICHT**

Nummer der Anmeldung

EP 05 01 5173

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 601 752 A (GENERAL ELECTRIC COMPANY) 15. Juni 1994 (1994-06-15) * siehe Ansprüche 1-19; Seite 2, Zeilen 3-53; Seite 6, Zeilen 51-55; Seite 7, Zeilen 10-13 * ----- | 1 | F25D23/06 B32B27/08 B32B27/30 B32B27/40 B32B5/20 C08J5/18 |
| | | | **RECHERCHIERTE SACHGEBIETE (IPC)** |
| | | | F25D B32B C08J |

Der vorliegende Recherchenbericht wurde für alle Patentansprüche erstellt

| Recherchenort | Abschlußdatum der Recherche | Prüfer |
|---|---|---|
| München | 7. Dezember 2005 | Okunowski, F |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes
    Dokument

EPO FORM 1503 03.82 (P04C03)

EP 1 621 834 A1

**ANHANG ZUM EUROPÄISCHEN RECHERCHENBERICHT**
**ÜBER DIE EUROPÄISCHE PATENTANMELDUNG NR.**        EP 05 01 5173

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-12-2005

| Im Recherchenbericht angeführtes Patentdokument | Datum der Veröffentlichung | Mitglied(er) der Patentfamilie | Datum der Veröffentlichung |
|---|---|---|---|
| EP 0601752        A | 15-06-1994 | CA    2102485  A1 | 31-05-1994 |
|  |  | JP    6218888  A | 09-08-1994 |
|  |  | US    5324589  A | 28-06-1994 |

Für nähere Einzelheiten zu diesem Anhang : siehe Amtsblatt des Europäischen Patentamts, Nr.12/82